Europäisches Patentamt

European Patent Office

Office européen des brevets

(19)

(11) Veröffentlichungsnummer: **0 098 461**
**B1**

(12) **EUROPÄISCHE PATENTSCHRIFT**

(45) Veröffentlichungstag der Patentschrift:
21.05.86

(51) Int. Cl.⁴: **G 09 B 21/00**

(21) Anmeldenummer: 83106092.6

(22) Anmeldetag: 22.06.83

(54) Vorrichtung zur Festlegung eines Koordinatenpunktes innerhalb einer flächigen Informations-Darstellung.

(30) Priorität: 07.07.82 DE 3225298
07.09.82 DE 3233115

(43) Veröffentlichungstag der Anmeldung:
18.01.84 Patentblatt 84/3

(45) Bekanntmachung des Hinweises auf die Patenterteilung:
21.05.86 Patentblatt 86/21

(84) Benannte Vertragsstaaten:
AT BE CH DE FR GB IT LI NL

(56) Entgegenhaltungen:
DE - A - 2 538 629

COMPUTER, Band 12, Nr. 2, 1979, D.A.
MICHALOPOULOS "Blind readers can use machine to recognize all fonts", Seiten 97-98

(73) Patentinhaber: Frank, Joachim, Kriegstrasse 15,
D-6831 Oberhausen-Rhsn. 1 (DE)

(72) Erfinder: Frank, Joachim, Kriegstrasse 15,
D-6831 Oberhausen-Rhsn. 1 (DE)

(74) Vertreter: Rau, Manfred, Dr. Dipl.-Ing. et al, Rau &
Schneck, Patentanwälte Königstrasse 2,
D-8500 Nürnberg 1 (DE)

## Beschreibung

Die Erfindung richtet sich auf eine Vorrichtung zur Festlegung eines Raster-Koordinatenpunktes innerhalb einer flächigen Informations-Darstellung und zur Erzeugung eines dem Informationsinhalt des Koordinatenpunktes entsprechenden elektrischen Informations-Signals, insbesondere zur Anordnung im Bereich einer Eingabetastatur für eine Computeranlage od.dgl.

Bekannte derartige Vorrichtungen (vgl. z.B. DE-A-25 38 629) werden z.B. durch einen in zwei Koordinatenrichtungen bewegbaren Steuerknüppel gebildet. Darüber hinaus sind durch Fingerdruck betätigbare, mit kapazitiven Schaltern versehene Folien oder optisch auslösende Lichtgriffel bekannt. Schließlich gibt es noch Einrichtungen, welche über eine flächige Informationsdarstellung bewegt werden können, wobei die Bewegung in einer Rollkugel abgetastet und in elektrische Signale umgesetzt werden können. Diese sämtlichen vorbekannten Vorrichtungen weisen den Nachteil auf, daß sie hinsichtlich der Koordinatenrichtungen und der Kerte der einzelnen Koordinaten die Vorgabe absoluter Einstellungen nicht oder nur unzulänglich ermöglichen, wobei in der Regel auch nicht gewährleistet ist, daß bei einer Unterbrechung der Betätigung durch den Benutzer der eingestellte Koordinatenpunkt unverändert erhalten bleibt.

Hiervon ausgehend liegt der Erfindung die Aufgabe zugrunde, eine derartige Vorrichtung so auszugestalten, daß ein leichter und müheloser Abruf eines elektrischen Informationssignals ermöglicht wird, wobei die jeweils letzte Einstellung auch mechanisch stabil erhalten bleibt.

Diese Aufgabe wird dadurch gelöst, daß wenigstens zwei Informationsabruf-Einrichtungen in Form von zwei in zueinander senkrechten Koordinatenrichtungen unabhängig voneinander beweglichen, endlagenstabilen Schiebern vorgesehen sind, welchen jeweils eine Positionserfassungseinrichtung zur Abgabe eines dem in Rasterabschnitte aufgeteilten Verschiebeweg entsprechenden elektrischen Signals zugeordnet ist, und welche jeweils eine Informationsabruf-Auslöseeinrichtung, über die der Informationsinhalt des jeweiligen Koordinatenpunktes abrufbar ist, aufweisen. Die zueinander senkrechten Verschiebewege der Schieber spannen also eine der flächigen Informations-Darstellung entsprechende Fläche auf, so daß ein Raster-Koordinatenpunkt dieser Fläche durch die Stellung der beiden längs zweier zueinander senkrechter Koordinatenrichtungen beweglichen Schieber festgelegt ist. Durch die Informationsabruf-Auslöseeinrichtungen an jedem Schieber kann z.B. der Informationsinhalt des jeweiligen Raster-Koordinatenpunktes abgerufen werden, wenn beide Einrichtungen gleichzeitig betätigt werden, oder aber der Informationsinhalt einer zugeordneten Zeile oder Spalte bei Betätigung nur einer der Einrichtungen. Diese erfindungsgemäße Ausgestaltung ermöglicht es dem Benutzer, nach einer Unterbrechung seines Arbeitens mit der Vorrichtung wieder zum ursprünglichen Raster-Koordinatenpunkt zurückzukehren und hiervon ausgehend z.B. den Auslesevorgang einer Zeile fortzusetzen.

In besonders vorteilhafter Weise läßt sich eine solche Vorrichtung einsetzen zur Kommunikation mit einer Computeranlage od.dgl. für Blinde und Sehbehinderte mit einem Bildschirmausgang und einer Einrichtung zur Umsetzung der ausgegebenen Informationen in Sprache oder als Großbild und mit einer Eingabetastatur.

Computer eröffnen an sich ein für Blinde und Sehbehinderte sehr vorteilhaftes Arbeitsfeld, weil die Kommunikation mit dem Computer von einem festen Arbeitsplatz aus mit einer räumlich gleichbleibenden Tastatur nach fest vorgegebenen Schemata abläuft. Ein Problem bereitet Blinden und Sehbhinderten dabei jedoch die Ausgabe durch den Computer, welche bei den üblichen Anlagen durch Ausdruck oder über Bildschirm erfolgt. Insbesondere um Blinden und Sehbehinderten dennoch eine Wahrnehmung dieser Ausgabe zu ermöglichen, wurden zum einen Einrichtungen geschaffen, welche die ausgegebenen Informationen in eine synthetische Sprache umsetzen oder Ausschnitte des Bildschirmbildes stark vergrößert wiedergeben. Damit wird zwar grundsätzlich eine Wahrnehmung der ausgegebenen Informationen ermöglicht, aus den nachfolgenden Gründen ergeben sich aber dennoch erhebliche Schwierigkeiten.

Für ein effizientes Arbeiten ist es erforderlich, daß Blinde und Sehbehinderte Programme benutzen, welche für sehende Benutzer entwickelt wurden. Diese Programme arbeiten häufig so, daß die Ausgabe auf die Wahrnehmung über einen Bildschirm zugeschnitten ist, d.h. am Bildschirm werden Operations-Listen für die Eingabe (Menues), Daten-Eingabe-Formulare (Masken) oder Arbeitstabellen für dynamische Rechnungs-Darstellung (Work-Sheets) dargestellt. Mit diesen Darstellungen wird dann so , gearbeitet, daß der Bedienende über die Tastatur eine Information eingibt und vom Computer als Antwort entweder eine kurze Zeichenfolge, z.B. eine Fehlermeldung, erhält, oder aber eine Ausgabe, die den Großteil einer Bildschirmseite belegt oder z.B. im Falle einer listenartigen Ausgabe mehr als eine ganze Bildschirmseite umfaßt, so daß nach Überlesen der ersten Bildschirmseite die Ausgabe der folgenden geschaltet werden muß. Im letztgenannten Fall einer umfangreicheren Bildschirmausgabe wird der Operateur häufig nicht den gesamten Inhalt der ausgegebenen Information vollständig und der Reihenfolge nach durchlesen, sondern sich lediglich einige ihn interessierende Teile durch diagonales Überfliegen mit dem Auge heraussuchen. Gerade dies ist aber dem Blinden und Sehbehinderten, welcher auf eine Sprach- bzw. Großbildausgabe herkömmlicher Art angewiesen ist, nicht möglich. Vielmehr muß dieser Personenkreis die Gesamtinformation der Reihe nach aufnehmen, was sich sowohl auf die leichte Erfaßbarkeit der gespeicherten Information als auch auf die Arbeitsgeschwindigkeit äußerst nachteilig auswirkt.

Daneben sind auch Ausgabeeinrichtungen bekannt, welche die ausgegebene Information in Punktschrift (Braille-Schrift) ausgeben. Diese Schrift wird vom Blinden abgetastet und macht es damit erforderlich, daß er bei der Kommunkation mit dem Computer zum Lesen der Ausgabe die Hände von der Eingabetastatur nehmen muß und sich für die erneute Eingabe erst wieder an der Tastatur orientieren muß. Darüber hinaus ist ein derartiger Ausdruck naturgemäß verhältnismäßkg aufwendig.

Hiervon ausgehend liegt der Erfindung weiterhin die Teilaufgabe zugrunde, eine Vorrichtung der genannten Art so auszugestalten, daß Blinden und Sehbehinderten eine leicht erfaßbare und schnelle Aufnahme von für die Bildschirmausgabe zugeschnittenen Computerausgangsinformationen möglich wird, wobei sich die Vorrichtung bei hoher Betriebssicherheit durch kostengünstige Herstellung und kompakten Aufbau auszeichnen soll.

Diese Aufgabe wird gelöst durch eine Vorrichtung, die sich dadurch auszeichnet, daß die flächige Informations-Darstellung durch Bildschirmausgangs-Informationspunkte gebildet ist. Durch diese erfindungsgemäße Ausgestaltung hat der Blinde oder Sehbehinderte insbesondere die Möglichkeit, den dem Sehenden möglichen Vorgang des "Überfliegens" enier Textseite auf seine spezifischen Verhältnisse übertragen nachzuvollziehen.

Als besonders günstig erweist es sich, die Informationsabruf-Einrichtungen ober- bzw. unterhalb und seitlich der Eingabetastatur anzuordnen. Eine derartige Anordnung bringt gegenüber einer separaten Anordnung der Schieber den Vorteil, daß die Bedienungsperson die Hände praktisch nicht aus dem Bereich der Eingabetastatur entfernen zu braucht, so daß eine besonders sichere Orientierung möglich ist und die Kommunkation mit dem Computer fließend erfolgen kann.

Gemäß einer weiteren Ausgestaltung der Erfindung ist vorgesehen, daß der Verschiebeweg jedes Schiebers durch eine zugeordnete Hell-Dunkel-Skala in ein Raster aufgeteilt ist und zur Positionserfassung eine die Skala abtastende optische Abtasteinrichtung dient. Diese Ausgestaltung gewährleistet ein besonders hohes Auflösungsvermögen bei zuverlässiger Funktion und kostengünstiger Herstellbarkeit. Grundsätzlich ist es im Rahmen der Erfindung selbstverständlich auch möglich, mechanische Kontakte, Hall-Geber und dgl. zur Positionserfassung und zur Abgabe eines entsprechenden Signals heranzuziehen. Durch die Anordnung von zwei Reflexionsabtasteinrichtungen wird die Unterscheidung der Bewegungsrichtung ermöglicht und eine Erhöhung des Auflösevermögens erreicht.

Als vorteilhaft erweist es sich, daß den Positionserfassungseinrichtungen Tongeneratoren zur akustischen Erkennbarmachung des Übergangs von einem Raster zum nächsten beim Verschieben des Schiebers nachgeordnet sind.

Weitere Merkmale, Vorteile und Einzelheiten der Erfindung ergeben sich anhand der Zeichnung. Dabei zeigen:

Fig. 1 eine Aufsicht auf eine Eingabetastatur mit einer erfindungsgemäßen Vorrichtung,

Fig. 2 eine Darstellung, welche die Zuordnung der einzelnen Rasterpunkte der Verschiebewege der Schieber zu den Raster-Koordinatenpunkten einer flächigen Informations-Darstellung veranschaulicht,

Fig. 3 einen Schnitt durch einen Schieber mit zugeordneter Skala, und

Fig. 4 einen Schnitt durch die Darstellung nach Fig. 3 längs der Linie IV-IV.

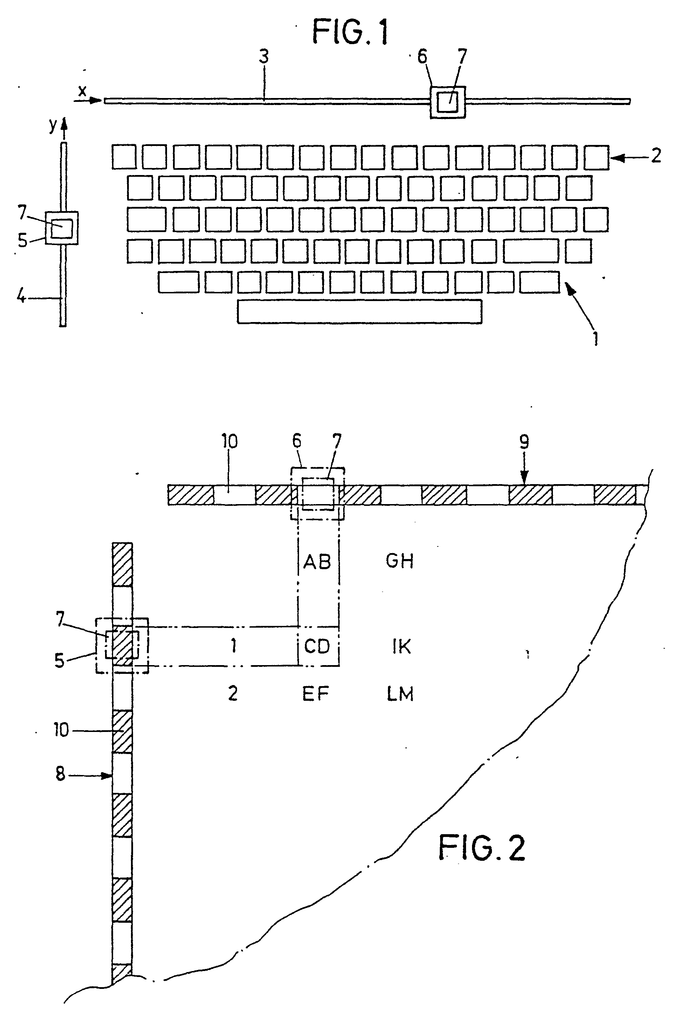

In Fig. 1 ist eine Eingabetastatur 1 dargestellt, wie sie von Eingabegeräten für Computer bekannt ist. Dieser Tastatur ist lediglich eine zusätzliche Tastenreihe 2 hinzugefügt, welche Tasten für Operationsweisen aufnimmt, wie sie speziell bei der Betätigung durch Blinde und Sehbehinderte erforderlich sind. Statt dieser Tastenreihe 2 kann auch eine einzige Umschalttaste vorgesehen sein, so daß nach Betätigung dieser Umschalttaste die einzelnen Eingabetasten als Funktionstasten verwendet werden können.

In waagerechter und senkrechter Richtung oberhalb bzw. seitlich der Eingabetastatur 1 sind Schlitze 3 und 4 vorgesehen, in welchen Schieber 5 und 6 endlagenstabil verschiebbar sind. Durch den Schlitz 4 wird die Y-Richtung und durch den Schlitz 3 die X-Richtung vorgegeben. Jeder Schieber 5, 6 ist mit einer Informations-Abrufausanlöseeinrichtung 7 in Form eines elektrischen Druckschalters versehen.

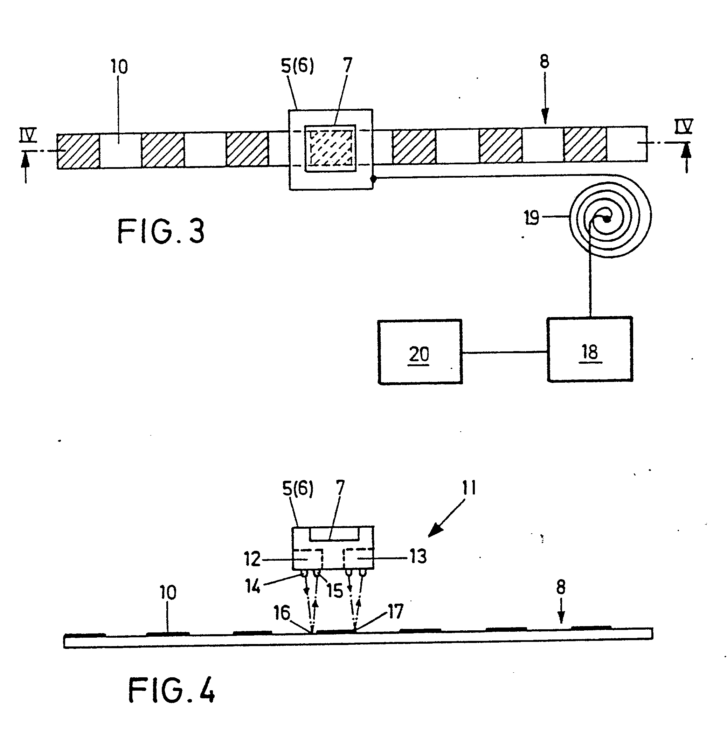

Den Schlitzen 3 und 4 sind unterhalb derselben Skalenträger mit einer eine Hell-Dunkel-Rasterung aufweisenden Skala 8, 9 zugeordnet. In Fig. 2 sind lediglich die Skalen 8, 9 dargestellt. Jeder helle bzw. dunkle Bereich definiert auf diese Weise einen Rasterabschnitt 10.

Wie aus dieser ausschnittsweisen Darstellung eines imaginären Bildschirmbildes in Fig. 2 ersichtlich, wird durch je einen Rasterabschnitt 10 der Skala 8 bzw. 9 eine Raster-Koordinate in der durch die Skalen 8, 9 aufgespannten Ebene definiert. Durch die Betätigung der Auslöseeinrichtungen 7 der beiden Schieber 5, 6 wird bei der Darstellung in Fig. 2 die Information "CD" ausgegeben. Durch Betätigung lediglich der Auslöseeinrichtung 7 des Schiebers 6 wird die Spalte AB ab der Position des Schiebers 5 nach unten ausgegeben. Durch die alleinige Betätigung der Auslöseeinrichtung 7 des Schiebers 5 wird die Zeile "1 CD IK" ab der Stellung des Schiebers 6, also ab der Information "CD" ausgegeben.

Selbstverständlich liegt es im Rahmen der Erfindung, daß durch eine entsprechende Ausgestaltung der Software durch die Auslöseeinrichtungen ein der jeweiligen spezifischen Problemstellung besonders angepaßter Auslösevorgang ausgelöst wird. Gemeinsam ist allen Betriebsweisen, daß durch die Stellung der Schieber 5 und 6 ein Raster-Koordinatenpunkt definiert wird.

Zur Erfassung der Position jedes Schiebers 5, 6 ist je eine Positionserfassungseinrichtung 11 vorgesehen, wobei die Positionserfassungseinrichtungen 11 der Schieber 5 und 6 im Prinzip entsprechend aufgebaut sind. Wie bereits im Zusammenhang mit Fig. 2 angesprochen, umfaßt jede Positionserfassungseinrichtung 11 eine Skala 8, 9, welche jeweils durch aufeinanderfolgende helle bzw. dunkle Rasterabschnitte 10 gebildet wird.

Jeder Schieber 5, 6 ist mit zwei optischen Abtasteinrichtungen 12, 13 (Fig. 3,4) versehen, welche jeweils einen Lichtsender 14 und einen hierzu in Reflexionsstellung angeordneten Lichtempfänger 15 aufweisen. Der gegenseite Abstand der Abtasteinrichtungen 12, 13 ist so bemessen, daß deren Abtastpunkte 16, 17 voneinander einen Abstand aufweisen, welcher größer als die Länge eines Rasterabschnittes 10 ist. Die Ausgänge der Abtasteinrichtungen 12, 13 führen zu einer elektronischen Auswerteeinrichtung 18. In dieser werden die Signalfolgen bezogen auf die einzelnen Abtasteinrichtungen 12 bzw. 13 ausgewertet. Setzt man für ein dunkles Rasterfeld 10 z.B. das Signal 0 und für ein helles Rasterfeld 10 z.B. das Signal 1, ergibt sich bei der Bewegung in einer Richtung z.B. des Schiebers 5 eine Signalfolge (1,0), (0,0), (0,1), während sich bei einer Bewegung in die andere Richtung die Signalfolge (0,1) (1,1) (I,0) ergibt so daß eine Richtungsdiskriminierung möglich wird und gleichzeitig natürlich eine elektronische Rasteraufteilung der durch die Skalen 8, 9 aufgespannten Fläche.

Die elektrische Verbindung zwischen den Schiebern 5, 6 bzw. den Abtasteinrichtungen 12, 13 mit der Elektronik 18 erfolgt über ein sich beim Verschieben selbst ab- bzw. aufrollendes Kabel 19. Der Auswerteelektronik 18 und damit den Abtasteinrichtungen 12, 13 ist ein Tongenerator 20 nachgeordnet. Dieser Tongenerator 20 ermöglicht es, daß ein dem ausgelesenen Informationsinhalt entsprechender Ton abgegeben wird. So kann z.B. ein hoher Ton abgegeben werden, der anzeigt, daß die jeweilige Zeile oder Spalte leer ist. Weiterhin ist es möglich, durch unterschiedliche Tonhöhen Bedeutungsinhalte des jeweiligen Koordinatenpunktes anzuzeigen. Schließlich kann beispielsweise durch die Zuordnung aufsteigender Tonhöhen zu aufeinanderfolgenden Zeilen die Rasteraufteilung der Zeilen akustisch wahrnehmbar gemacht werden. Aus den Vorstehenden ergibt sich, daß durch die Verwendung eines Tongenerators 20 ganz unterschiedliche Informationsinhalte akustisch ausgegeben werden können.

## Patentansprüche

1. Vorrichtung zur Festlegung eines Raster-Koordinatenpunktes (z.B. CD) innerhalb einer flächigen Informations-Darstellung und zur Erzeugung eines dem Informationsinhalt des Koordinatenpunktes (CD) entsprechenden elektrischen Informations-Signals, insbesondere zur Anordnung im Bereich einer Eingabetastatur (1) für Computeranlagen od.dgl., dadurch gekennzeichnet, daß wenigstens zwei Informationsabruf-Einrichtungen in Form von zwei in zueinander senkrechten Koordinatenrichtungen (Y, X) unabhängig voneinander beweglichen, endlagenstabilen Schiebern (5, 6) vorgesehen sind, welchen jeweils eine Positionserfassungseinrichtung (11) zur Abgabe eines dem in Rasterabschnitte (10) aufgeteilten Verschiebeweg entsprechenden elektrischen Signals zugeordnet ist und welche jeweils eine Informations-Abrufauslöseeinrichtung (7), über die der Informationsinhalt des jeweiligen Koordinatenpunktes abrufbar ist, aufweisen.

2. Vorrichtung nach Patentanspruch 1 zur Kommunikation mit einer Computeranlage od.dgl. für Blinde und Sehbehinderte, mit einem Bildschirmausgang und einer Einrichtung zur Umsetzung der ausgegebenen Information in Sprache oder als Großbild mit einer Eingabetastatur, dadurch gekennzeichnet, daß die fläche Informations-Darstellung durch die Bildschirmausgangs-Informationspunkte gebildet ist.

3. Vorrichtung nach Patentanspruch 2, dadurch gekennzeichnet, daß die Informationsabruf-Einrichtungen ober- bzw. unterhalb und seitlich der Eingabetastatur (1) angeordnet sind.

4. Vorrichtung nach Patentanspruch 1, dadurch gekennzeichnet, daß der Verschiebeweg jedes Schiebers (5, 6) durch eine zugeordnete Hell-Dunkel-Skala (8, 9) in einen Raster aufgeteilt ist und zur Positionserfassung eine die Skala (8, 9) abtastende optische Abtasteinrichtung (12,13) dient.

5. Vorrichtung nach Patentanspruch 4, dadurch gekennzeichnet, daß die Positionserfassungs-Einrichtung (11) zwei an jedem Schieber (5, 6) angeordnete Reflexionsabtasteinrichtungen (12, 13) umfaßt.

6. Vorrichtung nach Patentanspruch 2, dadurch gekennzeichnet, daß den Positionserfassungseinrichtungen (11) Tongeneratoren zur akustischen Erkennbarmachung des Übergangs von einem Rasterabschnitt (10) zum nächsten beim Verschieben der Schieber (5, 6) nachgeordnet sind.

## Claims

1. Apparatus for fixing a raster coordinate point (e.g. CD) within a flat data representation and for producing an electrical data signal corresponding to the data of the coordinate point (CD), particularly for placing in the vicinity of a keyboard (1) for a computer system or the like, wherein at least two data call-up devices are provided in the form of two end position-stable sliders (5, 6) movable independently of one another in two coordinate directions (Y, X) perpendicular to one another, a position detection device (11) being associated with each slider for supplying an electrical signal corresponding to the displacement path of the associated slider and said sliders being subdivided into raster sections (10) and having in each case a data call-up release device (7) by means of which to call up in each case the data of the coordinate point.

2. Apparatus as claimed in claim 1, for communication with a computer system or the like for blind and partially sighted people, said apparatus including a screen output and a device for converting the read-out data into speech, or as a large picture, with a keyboard, wherein the flat data representation is formed by screen output data points.

3. Apparatus as claimed in claim 2, wherein said data call-up devices are arranged above or below and to the sides of the keyboard (1).

4. Apparatus as claimed in claim 1, wherein the displacement path of each slider (5, 6) is subdivided into a raster by an associated light-dark scale (8, 9) and an optical scanner (12, 13) which scans the scale (8, 9) is used for position determination purposes.

5. Apparatus as claimed in claim 4, wherein each position detection device (11) comprises two reflection scanning devices (12, 13) arranged on each slider (5, 6).

6. Apparatus as claimed in claim 2, wherein the position detection devices (11) are followed by tone generators for the acoustic identification of the transition from one raster section (10) to the next during the displacement of said sliders (5, 6).

## Revendications

1°. Appareil pour la détermination d'un point (par exemple CD) dans un réseau de coordonnées sur une surface d'affichage d'informations et pour produire un signal d'information électrique correspondant au contenu d'information en ce point (CD), destiné notamment à être installé au voisinage d'un clavier de saisie (1) pour installations d'ordinateurs ou similaires, caractérisé en ce qu'il est prévu au moins deux dispositifs d'appel d'informations sous forme de deux curseurs (5,6) mobiles indépendamment l'un de l'autre dans des directions de coordonnées (Y,X) perpendiculaires entre elles, et à positions d'extrémité stables, un dispositif (11) de détermination de position étant associé à chaque curseur pour fournir un signal électrique correspondant à la course de déplacement décomposée en segments (10) du réseau de coordonnées,chaque curseur comportant un dispositif (7) de déclenchement d'appel d'information par lequel on peut appeler le contenu d'information du point de coordonnées considéré.

2°. Appareil selon la revendication 1 pour la communication de non-voyants et mal-voyants avec une installation d'ordinateur ou similaire,avec une sortie d'écran et un dispositif pour convertir l'information de sortie en langage parlé ou sous forme d'image agrandie,avec clavier de saisie, caractérisé en ce que la surface d'affichage d'informations est formée à partir des points d'information de la sortie d'écran.

3°. Appareil selon la revendication 2, caractérisé en ce que les dispositifs d'appel d'informations sont disposés au-dessus ou au-dessous et sur les côtés du clavier de saisie (1).

4°. Appareil selon la revendication 1, caractérisé en ce que la course de déplacement de chaque curseur (5,6) est divisée pour constituer un quadrillage en une graduation formée d'une alternance de zones claires et de zones obscures (8,9) et que la détermination de position est effectuée au moyen d'un dispositif de relevé optique (12,13) opérant sur ladite graduation (8,9).

5°. Appareil selon la revendication 4, caractérisé en ce que le dispositif (11) de détermination de position comporte deux dispositifs de relevé par réflexion de lumière (12,13) disposés sur chaque curseur (5,6).

6°. Appareil selon la revendication 2, caractérisé en ce que des générateurs sonores cooperent avec les dispositifs de détermination de position (11) pour rendre acoustiquement perceptible le passage des curseurs (5,6) d'un segment de réseau (10) au segment adjacent.

# FIG.1

# FIG.2

FIG. 3

FIG. 4